# EUROPÄISCHE PATENTSCHRIFT

(11) **EP 0 571 791 B1**
(45) Veröffentlichungstag und Bekanntmachung des Hinweises auf die Patenterteilung: **14.08.1996**
(21) Anmeldenummer: 93107332.4
(22) Anmeldetag: 06.05.1993
(51) Int. Cl.: F16J 15/34

(54) **Trockengasdichtung**
Dry gas seal
Garniture mécanique sans contact

(30) Priorität: 27.05.1992 CH 1724/92; 22.06.1992 CH 1962/92
(43) Veröffentlichungstag der Anmeldung: 01.12.1993
(73) Patentinhaber: Sulzer Turbo AG, CH-8005 Zürich (CH)
(72) Erfinder: Schmied, Joachim, CH-5422 Oberehrendingen (CH); Allenbach, Karl, CH-8483 Kollbrunn (CH)
(74) Vertreter: Heubeck, Bernhard

(56) Entgegenhaltungen:
- DE-A- 3 942 408
- GB-A- 1 213 820
- US-A- 3 926 443
- US-A- 4 095 005

## Beschreibung

Die Erfindung betrifft eine trockenlaufende Gasdichtung für eine drehende, durch eine Gehäusewand geführte Welle mit einer mit der Welle umlaufenden Wellenbüchse als Träger eines Dichtkörpers mit einer Dichtfläche und mit einem stationären Gleitring mit einer mittels Gas an die Dichtfläche angedrückten und mit diesem Gas geschmierten Gleitfläche, wobei der Gleitring aus einem Ringkörper besteht und an seiner der Dichtfläche zugekehrten Gleitfläche einen auf dem Ringkörper befestigten Gleitkörper aus kohlehaltigem Material trägt.

Solche Trockengasdichtungen sind beispielsweise aus DE-A-39 42 408 bekannt und dienen dazu, den unter einem gewissen Druck stehenden Gehäuse-Innenraum einer Turbomaschine, beispielsweise eines Turbokompressors oder einer Turbine, an der Durchführung der Welle nach aussen oder zu einer Zwischenkammer abzudichten, um ein Ausströmen des Mediums aus dem Innenraum zu verhindern. Dies erfolgt mittels eines als Sperrmedium dienenden Gases, welches die Gleitfläche des Gleitringes an die Dichtfläche drückt und somit den Austritt von Gas aus dem Innenraum minimalisiert. Gleichzeitig wird ein gasgefüllter Spalt zum berührungslosen Lauf der Dichtung gebildet.

Für eine einwandfreie und betriebssichere Funktion einer solchen Dichtung sind die Materialeigenschaften des Dichtkörpers und des Gleitringes von wesentlicher Bedeutung. Insbesondere muss für eine hinreichende Abführung der in der Dichtung gebildeten Wärme gesorgt werden, und andererseits dürfen im Betrieb keine störenden Verformungen oder Verlagerungen der Dichtungsteile auftreten, welche zu starker Abnützung oder zu Beschädigungen führen könnten.

Bei den bekannten Trockengasdichtungen ist beispielsweise der Gleitring als Ringkörper aus Stahl ausgebildet, in welchen an seiner Dichtseite ein Gleitkörper aus Kohle, beispielsweise mit Graphit-Struktur eingelassen ist. Die Wärmeleitfähigkeit des Stahlringes ist jedoch häufig zu klein, um die infolge der Wärmeabfuhr im Gleitring entstehenden Temperaturgradienten genügend klein zu halten. Bei zu hohen Temperaturgradienten kann sich der Gleitring, insbesondere bei relativ hoher Wärmedehnzahl, unzulässig verformen.

Es ist zwar versucht worden, den Gleitring einteilig aus Kohle auszuführen, was jedoch neben der schlechten Wärmeleitung den Nachteil der mangelnden Festigkeit und Belastbarkeit der Dichtung mit sich bringt. Auch eine einteilige Ausführung des Gleitringes aus Siliziumkarbid ist bekannt geworden, womit sich jedoch keine hinreichend guten Gleiteigenschaften erzielen lassen, die man insbesondere beim Anfahren benötigt.

Die Erfindung setzt sich die Aufgabe, die angegebenen Nachteile des Standes der Technik zu vermeiden, und insbesondere bei der eingangs angegebenen trockenlaufenden Gasdichtung bei Verbesserung der Gleiteigenschaften die Deformationen infolge der Wärmeabfuhr und der Druckbelastung zu verringern und damit einen sicheren Betrieb zu ermöglichen.

Erfindungsgemäss wird diese Aufgabe dadurch gelöst, dass der Ringkörper aus einem Material mit ähnlichem Elastizitätsmodul wie Stahl und im Vergleich zu Stahl höherer Wärmeleitfähigkeit und kleinerem Wärmedehnungskoeffizienten besteht, und dass der Gleitkörper auf dem Ringkörper mit einer Lötverbindung befestigt ist.

Mit Vorteil haben Gleitkörper und Ringkörper ähnliche Wärmeausdehnungskoeffizienten.

Mit Vorteil besteht der Ringkörper aus einem Karbid, insbesondere aus der Gruppe der Silizium-, Wolfram- oder Titankarbid oder aus einem ähnlichen Sinter-Hartmetall.

Als besonders vorteilhaft hat sich kohledotiertes Siliziumkarbid erwiesen, dessen Wärmeleitfähigkeit erheblich über der von Stahl liegt, dessen Wärmeausdehnungskoeffizient deutlich geringer als der von Stahl ist, und welches einen hinreichend hohen Elastizitätsmodul mit entsprechender grosser Härte besitzt. Verglichen mit reinem Siliziumkarbid oder Silizium/Siliziumkarbid-Compounds lässt sich kohledotiertes Siliziumkarbid besonders leicht mit einer Kohleschicht verlöten, wobei zwischen dem Lot und dem kohledotierten Siliziumkarbid einerseits und der Kohleschicht andererseits eine besonders innige und feste strukturelle Verbindung durch Legierung oder Diffusion oder chemische Verbindung gebildet wird, welche derartige Spannungen aufnehmen kann, dass sich auch bei extremen Betriebsbedingungen der Gleitkörper nicht vom Ringkörper löst.

Als geeignetes Lot hat sich ein Silber-Titan-Lot mit einem Titangehalt von ca. 2 - 6 Gew.-% erwiesen, was eine Löttemperatur von etwa 1050^{o}C ergibt.

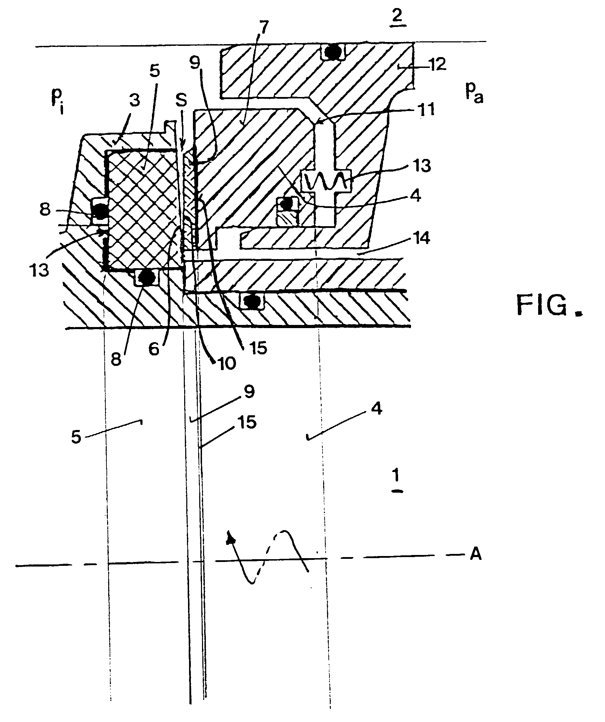

Die Erfindung wird anhand des in der Figur dargestellten Ausführungsbeispiels näher erläutert. Dieses zeigt eine als Trockengasdichtung ausgeführte axiale Wellendichtung im Schnitt längs der Wellenachse.

Bei dem in der Figur dargestellten Beispiel ist eine Welle 1 dichtend durch die Gehäusewand 2, beispielsweise einer Turbomaschine von einer Stelle höheren Druckes pᵢ zu einer Stelle tieferen Druckes pₐ geführt. Die Dichtung weist eine auf die Welle 1 aufgesetzte Wellenbüchse 3 auf, die auf ihrer Aussenseite einen Dichtkörper 5 trägt, welcher auf seiner Aussenseite wiederum eine kreisringförmige Dichtfläche 6 bildet. Vorzugsweise ist der Dichtkörper 5 aus einem Hartmetall ausgeführt, beispielsweise aus Siliziumkarbid, oder einem anderen Material mit ähnlichen Gleiteigenschaften. Zur Abdichtung des hohen Innendruckes pᵢ sind zwischen dem Dichtkörper 5 und der Wellenbüchse 3 eine oder mehrere in Nuten der Wellenbüchse 3 eingelassene O-ringförmige Dichtungen 8 vorgesehen.

In die die Wellendurchführung bildende Bohrung der Gehäusewand 2 ist ein Dichtungshalter 12 eingeführt, welcher einen Teil der Gehäusewand 2 bildet, und in welchem ein stationärer, d.h. nicht-rotierender, aber axial etwas verschiebbarer Gleitring 7 sitzt, welcher auf seiner der Dichtfläche 6 des Dichtkörpers 5 zugekehrten Seite 10 einen Gleitkörper 9 aus einem kohlehaltigen Material mit guten Gleiteigenschaften trägt, z.B. aus Kohle mit Graphitstruktur oder einem kohlekeramischen Werkstoff.

Durch den Innendruck pᵢ wird die Gleitringrückseite 11 vom Dichtungshalter 12 her, eventuell unterstützt durch eine Feder 13, gegen den Dichtkörper 5 gedrückt. Gleichzeitig wird durch das zugeführte Gas im Dichtspalt S zwischen dem Dichtkörper 5 und dem Gleitkörper 9 ein Gasfilm von einigen Mikrometern Dicke gebildet, welcher eine berührungslose Dichtung bewirkt. Dabei kann die Schmierung der Gleitflächen in bekannter Weise zum Beispiel aerodynamisch über Taschen oder Rillen in der Gleitfläche oder Dichtfläche, oder aerostatisch mit Gaszuführung durch den Gleitkörper hindurch zur Gleitfläche erfolgen. Das durch den Dichtspalt und die verschiedenen Dichtungsringe hindurchtretende Leckgas wird über eine Leitung 14 nach aussen abgeführt.

Der Gleitring 7 besteht aus einem Ringkörper 4 aus einem Material mit ähnlichem Elastizitätsmodul wie Stahl, aber mit einer höheren Wärmeleitfähigkeit als Stahl und einem kleineren Wärmeausdehnungskoeffizienten als Stahl, so dass die Temperaturgradienten im Ringkörper 4 infolge der im Dichtspalt gebildeten Wärme besonders gering sind. Zusammen mit dem kleinen Wärmeausdehnungskoeffizient hat dies relativ geringe Deformationen des Ringkörpers 4 im Betrieb zur Folge.

Der kohlehaltige Gleitkörper 9 wird mit dem Ringkörper 4 mittels einer Lötverbindung 15 fest und innig verbunden, welche sich auch bei extremen Betriebsbedingungen nicht löst.

Besonders gut geeignet und vorteilhaft ist die Ausbildung des Ringkörpers 4 aus einem Sinterkarbidmaterial, beispielsweise aus der Gruppe der Silizium-, Wolfram- oder Titankarbide, welche sich mit einem geeigneten Lot gut mit dem aus Kohle oder kohlekeramischem Werkstoff bestehenden Gleitkörper 9 verlöten lassen.

Eine besonders feste Lötverbindung ergibt sich bei Materialien, welche mit dem Lot eine innige strukturelle Verbindung eingehen, welche im Vergleich zu Verklebungen oder Verkittungen schon aufgrund der gebildeten Materialstruktur eine bessere Festigkeit aufweist. Als besonders geeignet hat sich beispielsweise die Ausbildung des Ringkörpers 4 aus einem kohledotierten Siliziumkarbid erwiesen, welches sich besonders gut mit einem geeigneten Lot, z.B. einem Silber-Titan-Lot mit einem Titangehalt von etwa 2 - 6 Gew.-% und einer Löttemperatur von etwa 1050^{o}C, nahezu unlösbar mit dem kohlehaltigen Gleitkörper 9 verbinden lässt. Die beim Verlöten von Ringkörper 4 und Gleitkörper 9 gebildete Lot-Zwischenschicht 15 ist zudem hinreichend weich, um Wärmespannungen und Deformationen aufnehmen zu können, ohne dass sich die Teile voneinander lösen.

Mit der beschriebenen Materialwahl lässt sich also eine trockenlaufende Gasdichtung herstellen, welche auch unter extremen Betriebsbedingungen keine unzulässigen Deformationen aufweist und daher eine verbesserte Betriebssicherheit und einen vergrösserten Anwendungsbereich aufweist.

Von Vorteil ist es, wenn der Gleitkörper 9 und der Ringkörper 4 ähnliche Wärmeausdehnungskoeffizienten haben. Dies führt zu besonders geringen relativen Wärmedehnungen zwischen Gleitkörper und Ringkörper während des Lötvorganges infolge der dabei erforderlichen hohen Temperaturen.

## Patentansprüche

1. Trockenlaufende Gasdichtung für eine drehende, durch eine Gehäusewand (2) geführte Welle (1) mit einer mit der Welle (1) umlaufenden Wellenbüchse (3) als Träger eines Dichtkörpers (5) mit einer Dichtfläche (6), und mit einem stationären Gleitring (7) mit einer mittels Gas an die Dichtfläche (6) gedrückten und mit diesem Gas geschmierten Gleitfläche (10), wobei der Gleitring (7) aus einem Ringkörper besteht und an seiner der Dichtfläche (6) zugekehrten Gleitfläche (10) einen auf dem Ringkörper (4) befestigten Gleitkörper (9) aus kohlehaltigem Material trägt, dadurch gekennzeichnet, dass der Ringkörper (4) aus einem Material mit ähnlichem Elastizitätsmodul wie Stahl und im Vergleich zu Stahl höherer Wärmeleitfähigkeit und kleinerem Wärmeausdehnungskoeffizienten besteht, und dass der Gleitkörper (9) auf dem Ringkörper (4) mit einer Lötverbindung befestigt ist.

2. Dichtung nach Anspruch 1, dadurch gekennzeichnet, dass der Ringkörper (4) und der Gleitkörper (9) einen ähnlichen Wärmeausdehnungskoeffizienten besitzen.

3. Dichtung nach Anspruch 1 oder 2, dadurch gekennzeichnet, dass der Ringkörper (4) aus einem gesinterten Hartmetall besteht.

4. Dichtung nach Anspruch 3, dadurch gekennzeichnet, dass der Ringkörper (4) aus einem Material der Gruppe von Silizium-, Wolfram- und Titankarbid besteht.

5. Dichtung nach Anspruch 4, dadurch gekennzeichnet, dass der Ringkörper (4) aus einem kohledotierten Siliziumkarbid besteht.

6. Dichtung nach einem der Ansprüche 1 - 5, dadurch gekennzeichnet, dass der Gleitkörper (9) aus einem kohlehaltigen Material mit Graphitstruktur besteht.

7. Dichtung nach einem der Ansprüche 1 - 5, dadurch gekennzeichnet, dass der Gleitkörper (9) aus einem kohlekeramischen Material besteht.

8. Dichtung nach einem der Ansprüche 1 - 7, dadurch gekennzeichnet, dass das Lot (15) aus einem Material besteht, das sowohl mit dem Ringkörper (4) als auch mit dem Gleitkörper (9) eine innige strukturelle Verbindung einzugehen vermag.

9. Dichtung nach Anspruch 8, dadurch gekennzeichnet, dass das Lot (15) ein Silber-Titan-Lot ist.

10. Dichtung nach Anspruch 9, dadurch gekennzeichnet, dass der Titangehalt des Lotes (15) im Bereich von 2 - 6 Gew.-% liegt.

## Claims

1. Dry running gas seal for a rotating shaft (1) led through a housing wall (2) comprising a shaft sleeve (3) rotating with the shaft (1) as a carrier for a sealing member (5) having a sealing surface (6), and a stationary slide ring (7) with a sliding surface (10) pressed by means of gas against the sealing surface (6) and lubricated with this gas, wherein the slide ring (7) comprises a ring member and carries at its sliding surface (10) facing the sealing surface (6) a sliding member (9) of carbon containing material secured to the ring member (4), characterized in that the ring member (4) consists of a material with a similar modulus of elasticity to that of steel and of higher thermal conductivity and smaller thermal coefficient of expansion in comparison to steel; and in that the sliding member (9) is secured to the ring member (4) by a brazed connection.

2. Seal in accordance with claim 1, characterized in that the ring member (4) and the sliding member (9) have a similar coefficient of thermal expansion.

3. Seal in accordance with claim 1 or claim 2, characterized in that the ring member (4) consists of a sintered hard metal.

4. Seal in accordance with claim 3, characterized in that the ring member (4) consists of a material of the group comprising silicon carbide, tungsten carbide and titanium carbide.

5. Seal in accordance with claim 4, characterized in that the ring member (4) comprises carbon doped silicon carbide.

6. Seal in accordance with one of the claims 1 to 5, characterized in that the sliding member (9) comprises a carbon containing material with graphite structure.

7. Seal in accordance with one of the claims 1 to 5, characterized in that the sliding member (9) consists of a carbon ceramic material.

8. Seal in accordance with one of the claims 1 to 7, characterized in that the brazing material (15) consists of a material which is able to enter into an intimate structural connection both with the ring member (4) and also with the sliding member (9).

9. Seal in accordance with claim 8, characterized in that the brazing material (15) is a silver-titanium brazing material.

10. Seal in accordance with claim 9, characterized in that the titanium content of the brazing material (15) lies in the range from 2 - 6 % by weight.

## Revendications

1. Garniture mécanique d'étanchéité sans contact pour un arbre (1) qui tourne, qui passe à travers une paroi de carter (2), avec un manchon d'arbre (3), faisant tout le tour de l'arbre (1) servant de support à un corps d'étanchéité (5) avec une surface d'étanchéité (6) et avec un anneau glissant immobile (7) avec une surface de glissement (10) pressée au moyen d'un gaz sur la surface d'étanchéité (6) et lubrifiée par ce gaz, l'anneau glissant (7) consistant en un corps annulaire et portant sur sa surface de glissement (10), tournée vers la surface d'étanchéité (6), un corps de glissement (9), fixé sur le corps annulaire (4), en une matière contenant du carbone, garniture d'étanchéité caractérisée en ce que le corps annulaire (4) consiste en une matière qui a un module d'élasticité analogue à celui de l'acier et a, par rapport à l'acier, une conductibilité thermique plus élevée et un coefficient de dilatation plus petit et en ce que le corps de glissement (9) est fixé sur le corps annulaire (4) par une liaison par brasage .

2. Garniture d'étanchéité selon la revendication 1, caractérisée en ce que le corps annulaire (4) et le corps de glissement (9) possèdent un coefficient de dilatation analogue.

3. Garniture d'étanchéité selon la revendication 1 ou 2, caractérisée en ce que le corps annulaire (4) est réalisé en un métal dur fritté.

4. Garniture d'étanchéité selon la revendication 3, carcatérisée en ce que le corps annulaire (4) consiste en une matière faisant partie du groupe des carbures de silicium ou carbures de tungstène ou carbures de titane.

5. Garniture d'étanchéité selon la revendication 4, caractérisée en ce que le corps annulaire (4) consiste en un carbure de silicium dopé au carbone.

6. Garniture d'étanchéité selon l'une des revendications 1 à 5, caractérisée en ce que le corps de glissement (9) consiste en une matière contenant du carbone avec une structure en graphite.

7. Garniture d'étanchéité selon l'une des revendications 1 à 5, caractérisée en ce que le corps de glissement (9) consiste en une matière céramique carbonée.

8. Garniture d'étanchéité selon l'une des revendications 1 à 7, caractérisée en ce que le métal d'apport (15) consiste en une matière, qui peut former avec le corps annulaire (4) comme aussi avec le corps de glissement (9) une liaison structurelle intime.

9. Garniture d'étanchéité selon la revendication 8, caractérisée en ce que le métal d'apport (15) est un métal d'apport à base de titane et d'argent.

10. Garniture d'étanchéité selon la revendication 9, caractérisée en ce que la teneur en titane du métal d'apport (15) est comprise entre 2 et 6 % en poids.
